# EUROPÄISCHE PATENTSCHRIFT

(11) **EP 3 502 333 B1**
(45) Veröffentlichungstag und Bekanntmachung des Hinweises auf die Patenterteilung: **28.09.2022**
(21) Anmeldenummer: 18000972.2
(22) Anmeldetag: 14.12.2018
(51) Int. Cl.: D06C 3/06, B65H 23/025

(54) **SEGMENTWALZE**
DRUM WITH LATHS
ROULEAUX DE LATTES

(30) Priorität: 22.12.2017 DE 102017012009
(43) Veröffentlichungstag der Anmeldung: 26.06.2019
(73) Patentinhaber: Texmag GmbH Vertriebsgesellschaft, 8800 Thalwil (CH)
(72) Erfinder: Rester, Bernd, 86462 Langweid, Achsheim (DE); Spatz, Michael, 86399 Bobingen, Waldberg (DE)
(74) Vertreter: Witzany, Manfred

(56) Entgegenhaltungen:
- EP-A1- 2 343 257
- WO-A1-90/13503
- DE-C- 917 304
- DE-C1- 10 060 231

## Beschreibung

Die Erfindung betrifft eine Segmentwalze, welche mindestens einen Walzenkörper aufweist, der um mindestens eine Achse drehbar gelagert ist. Dieser Walzenkörper weist außenseitig mindestens eine Nut auf, in die mindestens eine Feder eines längs zur Achse verschiebbaren Profils eingreift. Dieses mindestens eine Profil ergreift dabei mindestens eine Warenbahn mittelbar oder unmittelbar.

Aus der EP 2 343 257 A1 ist eine Vorrichtung zum Regeln des seitlichen Versetzens mindestens einer Materialbahn bekannt. Diese Vorrichtung weist eine Walze auf, an deren Umfang mehrere Latten querverschiebbar angeordnet sind. Diese Latten werden von einer Stelleinrichtung derart erfasst, dass sie während eines Walzenumlaufs die gewünschte Stellbewegung ausführen. Zur Verringerung der Reibung zwischen den Latten einerseits und der Walze andererseits sind zwischen beiden Rollen vorgesehen. Dadurch verringert sich diese Reibung auf den Rollwiderstand der Rollen.

Aus der DE 917 304 C ist eine Breithalterwalze für laufende Gewebebahnen bekannt. Auch diese Walze weist längsverschiebbare Latten auf, die von einer Stelleinrichtung entsprechend angesteuert werden. Zur Verringerung der Reibung dieser Latten sind Kugeln vorgesehen, die in Laufrillen axial geführt sind.

Aus der DE 1 460 639 A ist eine gattungsgemäße Segmentwalze bekannt. Diese besteht aus einem Walzenkörper, der um eine Achse drehbar gelagert ist. An der Außenseite dieses Walzenkörpers sind Nuten eingeformt, in die H-förmige Profile eingeschoben sind. Diese Profile sind elastisch ausgebildet und erfassen mit ihrer Außenseite eine Warenbahn. Durch Verschieben der Profile kann die Warenbahn, in die Breite gestreckt werden. Diese Segmentwalze bildet den Ausgangspunkt der vorliegenden Erfindung.

Der Erfindung liegt die Aufgabe zugrunde, eine Segmentwalze der eingangs genannten Art zu schaffen, die sich durch eine hohe Genauigkeit der Warenbahnbeeinflussung und eine hohe Standzeit auszeichnet.

Diese Aufgabe wird mit den folgenden Merkmalen gelöst.

Eine erfindungsgemäße Segmentwalze weist mindestens einen Walzenkörper auf, der vorzugsweise aus einem Metall, insbesondere einer Metalllegierung gefertigt ist. Dieser mindestens eine Walzenkörper ist vorzugsweise in etwa zylinderförmig, wobei auch hiervon abweichende Formen durchaus sinnvoll sein könnten. Der mindestens eine Walzenkörper ist drehbar um mindestens eine Achse gelagert, wobei die Achse vorzugsweise mit einer ggf. vorhandenen Symmetrieachse des mindestens einen Walzenkörpers zusammenfällt. Am mindestens einen Walzenkörper ist außenseitig mindestens eine Nut vorgesehen, in die mindestens eine Feder mindestens eines längs zur mindestens einen Achse verschiebbaren Profils eingreift. Dieses mindestens eine Profil ergreift die mindestens eine Warenbahn mittelbar oder unmittelbar. Unter dem Begriff "ergreifen" ist dabei nicht notwendigerweise ein Erfassen der mindestens einen Warenbahn von beiden Bahnseiten zu verstehen. Es reicht üblicherweise aus, die mindestens eine Warenbahn von einer Seite zu erfassen. Demnach kann das Ergreifen auch ausschließlich einseitig realisiert werden. Dies ist auch in praktischen Anwendungen der Regelfall. Es hat sich herausgestellt, dass eine elastische Ausbildung des mindestens einen Profils entsprechend dem Stand der Technik erhebliche Nachteile mit sich bringt. Üblicherweise kann die Lage des mindestens einen Profils nur von den Stirnseiten der Segmentwalze sinnvoll beeinflusst werden. Damit sind die Lage und eine mögliche Bewegung des mindestens einen Profils strenggenommen nur an den Stirnseiten der Segmentwalze definiert. Im Übrigen bestimmen Kräftegleichgewichte im mindestens einen Profil, wie sich dieses einstellt und bewegt. Bei diesem Kräftegleichgewicht spielen insbesondere Kräfte der mindestens einen Warenbahn eine entscheidende Rolle, wodurch die auf die mindestens eine Warenbahn ausgeübten Kräfte in einem gewissen Bereich undefiniert sind. Dies hat eine unsaubere und insbesondere schlecht vorhersagbare Warenbahnbeeinflussung zur Folge. Zur Lösung dieses Problems wird vorgeschlagen, das mindestens eine Profil schubsteif auszubilden. Damit kann das gesamte, mindestens eine Profil über seine volle Länge definiert von den Stirnseiten der Segmentwalze aus eingestellt werden. Jeder Punkt des mindestens einen Profils folgt demnach einer von den Stirnseiten ausgeübten Steuerbewegung. Die gesamte Bewegung des mindestens einen Profils ist daher definiert und führt zu einer gut vorhersagbaren und insbesondere reproduzierbaren Krafteinwirkung auf die mindestens eine Warenbahn. Dies hat sowohl beim Breitstrecken als auch beim Bahnlaufregeln der mindestens einen Warenbahn Vorteile, da die Beeinflussung der mindestens einen Warenbahn reproduzierbar und gleichmäßig erfolgt. Durch diese Maßnahme wird auch Ermüdungsbrüchen im mindestens einen Profil vorgebeugt. Durch das permanente Ziehen und Drücken am mindestens einen Profil ergeben sich ständige, oszillatorische Bewegungen, die in bekannter Weise Ermüdungsbrüche hervorrufen. Insbesondere bei dem Vorsehen von vielen Profilen auf der Segmentwalze ist die Bruchanfälligkeit der Profile sehr unangenehm, da diese zu recht häufigen Reparaturen führt. Schließlich ist zu berücksichtigen, dass Brüche des mindestens einen Profils zu einer Beschädigung der mindestens einen Warenbahn sowie zu Verletzungen des bedienenden Personals führen können. Es ist daher wünschenswert, diese Effekte möglichst zu unterdrücken. Durch den Einsatz mindestens eines formstabilen Profils ergibt sich eine zufriedenstellende Lösung dieses Problems. Allerdings hat ein formstabiles Profil einen Nachteil, dass dessen Einsatzfähigkeit erheblich reduziert ist. Das mindestens eine Profil muss längs zur mindestens einen Achse verschiebbar sein, um die gewünschte Steuerwirkung zu erzielen. Diese Verschiebbarkeit erfordert aber einen gewissen Freiraum zwischen der mindestens einen Nut und der mindestens einen Feder. Dieser Freiraum führt aber insbesondere während der Bewegung des mindestens einen Profils längs zur mindestens einen Achse zu Querbewegungen. Damit schlägt die mindestens eine Feder häufig in der mindestens einen Nut an, was zu einer Abbremsung dieser Bewegung führen kann. Dieses Schlagen erzeugt zudem unerwünschte Schwingungen im mindestens einen Profil, die eine feinfühlige Beeinflussung der mindestens einen Warenbahn verhindern.

Außerdem führen diese Schläge zu unerwünschten Geräuschen und wiederum zu einer Verkürzung der Standzeit. Um die unerwünschten Geräusche zu reduzieren, sowie eine ungewollte Abbremsung zu vermeiden, die feinfühlige Beeinflussung der mindestens einen Warenbahn zu gewährleisten und die Standzeit der Segmentwalze zu verbessern, ist dies daher kein geeignetes Mittel. Es wird daher zusätzlich vorgeschlagen, am mindestens einen Walzenkörper und/oder am mindestens einen Profil mindestens ein Gleitelement mit elastischer Lippe vorzusehen bzw. mindestens eine elastische Lippe mit Gleitfunktion. Diese elastische Lippe ist hierbei beim Eingriff der mindestens einen Feder in die mindestens eine Nut elastisch deformierbar. Auf diese Weise wird das mindestens eine Profil schwingungslos bzw. schwingungsarm, gleitend und sicher, aber auch verschiebbar am mindestens einen Walzenkörper gehalten. Diese mindestens eine elastische Lippe reduziert die Bewegungsfreiheit des mindestens einen Profils quer zur gewünschten Verschiebungsrichtung und verhindert insbesondere das Auftreten von Schlägen. Damit wird auch dem Erzeugen von Schwingungen im mindestens einen Profil vorgebeugt. Ferner kann das mindestens eine Gleitelement mit elastischer Lippe bzw. die mindestens eine elastische Lippe mit Gleitfunktion auch als Toleranzausgleich zwischen den Bauteilen Anwendung finden. Erst durch die Kombination dieser Maßnahmen ergibt sich zum Beispiel die gewünschte Standzeitverlängerung der Segmentwalze bei gleichzeitig feinfühliger Beeinflussung der mindestens einen Warenbahn.

Zur einfachen Herstellung der Segmentwalze ist es vorteilhaft, wenn die mindestens eine Lippe einstückig mit dem mindestens einen Walzenkörper oder dem mindestens einen Profil verbunden ist. Vorzugsweise wird die mindestens eine Lippe direkt an den mindestens einen Walzenkörper oder im mindestens einen Profil angeformt, so dass zur Herstellung der mindestens einen Lippe kein eigener Prozess-Schritt erforderlich ist.

Alternativ kann das mindestens eine Gleitelement mit elastischer Lippe bzw. die mindestens eine elastische Lippe auch als gesondertes Teil ausgebildet sein, welches in die mindestens eine Nut oder Feder eingesteckt ist. Damit steht für das mindestens eine gesonderte Teil eine breite Materialauswahl zur Verfügung, so dass es aus beliebigen Materialien gefertigt werden kann. Vorzugsweise besteht das mindestens eine gesonderte Teil aus einem Polymer, um auf diese Weise hinreichend gute elastische Eigenschaften für das mindestens eine Gleitelement mit elastischer Lippe bzw. für die mindestens eine elastische Lippe zu erzielen.

Um das mindestens eine gesonderte Teil sicher und insbesondere unverlierbar zu halten, ist es zweckmäßig, die mindestens eine Nut oder Feder hinterschnitten auszubilden. Ist dieser Hinterschnitt hinreichend groß, ergibt sich eine formschlüssige Halterung des mindestens einen gesonderten Teils. Die Montage erfolgt in diesem Fall bevorzugt durch Einschieben in Längsrichtung.

Zur Erzielung einer sicheren Verbindung zwischen dem mindestens einen Profil und dem mindestens einen Walzenkörper ist es zweckmäßig, wenn die mindestens eine Feder beidseitig von den Lippen erfasst ist.

Insbesondere bei Verwendung beidseitig zur mindestens einen Feder angeordneten Lippen ist es vorteilhaft, wenn der mindestens einen Lippe mindestens ein Abstandshalter zugeordnet ist. Dieser mindestens eine Abstandshalter verhindert eine undefinierte Bewegbarkeit der mindestens einen Feder in der mindestens einen Nut und sorgt auf diese Weise für eine zusätzliche Stabilisierung des mindestens einen Profils. Ferner bietet dieser Abstandshalter auch eine gleitende Funktion für das mindestens eine Profil.

Vorzugsweise ist der mindestens eine Abstandshalter elastisch verstellbar ausgebildet. Auf diese Weise ergibt sich noch eine gewisse elastische Nachgiebigkeit, selbst wenn die mindestens eine Feder bereits den mindestens einen Abstandshalter berührt. Insbesondere ist daran gedacht, den mindestens einen Abstandshalter im Verhältnis zur mindestens einen Lippe steifer auszubilden, so dass sich in der Zusammenwirkung zwischen der mindestens einen Lippe und dem mindestens einen Abstandshalter eine progressive Federwirkung ergibt.

Grundsätzlich könnte die mindestens eine Lippe aus einem geeigneten, elastischen Material hergestellt werden. Einfacher ist es jedoch, die mindestens eine Lippe dünnwandig im Verhältnis zum mindestens einen Profil auszubilden. Damit können beide Teile aus dem gleichen Material hergestellt sein. Die Elastizität der mindestens einen Lippe im Verhältnis zum übrigen mindestens einen Profil ergibt sich dann ausschließlich durch die Formgebung, da dünnwandige Teile leichter verformbar sind als dickwandige.

Insbesondere beim Einsatz im Nassbereich der mindestens einen Warenbahn ist es vorteilhaft, wenn die mindestens eine Lippe eine flüssigkeitsdichte Verbindung herstellt. Dadurch wird das Eindringen von Flüssigkeiten in die mindestens eine Nut verhindert, die insbesondere beim Wechsel der Warenbahnart zu Problemen führen könnte.

Zur Erzielung einer guten Gleitwirkung für das mindestens eine Profil ist es vorteilhaft, wenn die mindestens eine Lippe als Gleitteil ausgebildet ist. Auf diese Weise ergibt sich eine reibungsarme Verschiebbarkeit des mindestens einen Profils.

Zur Erzielung einer universellen Einsetzbarkeit der Segmentwalze ist es vorteilhaft, wenn im mindestens einen Profil mindestens ein Belag gehalten ist, der die mindestens eine Warenbahn erfasst. Damit kann der mindestens eine Belag an die konkrete Warenbahnart angepasst werden, ohne das komplette mindestens eine Profil auszutauschen. In diesem Fall reicht es aus, lediglich den Belag auszutauschen.

Um das mindestens eine Profil schwingungsarm am mindestens einen Waizenkörper zu halten, ist es schließlich günstig, wenn das mindestens eine Profil beidendig in den Nuten gehalten ist. Dadurch ergibt sich insbesondere gegenüber radial wirkenden Kräften ein formschlüssiger Sitz des mindestens einen Profils.

Schließlich ist es günstig, am mindestens einen Walzenkörper im Bereich der mindestens einen Nut außenseitig mindestens eine Schutznase vorzusehen. Diese mindestens eine Schutznase verhindert Beschädigungen der Nutenwangen sowohl bei der Montage der Segmentwalze als auch während des Betriebs. Insbesondere wird hierdurch eine Beschädigung der mindestens einen Nut aufgrund äußerer Krafteinwirkung reduziert.

Der Erfindungsgegenstand wird beispielhaft anhand der Zeichnung erläutert:
Es zeigt:
- Figur 1: eine räumliche Darstellung einer Segmentwalze,
- Figur 2: eine Querschnittsdarstellung der Segmentwalze gemäß Figur 1 und
- Figur 3: die Darstellung gemäß Figur 2 einer alternativen Ausführungsform.

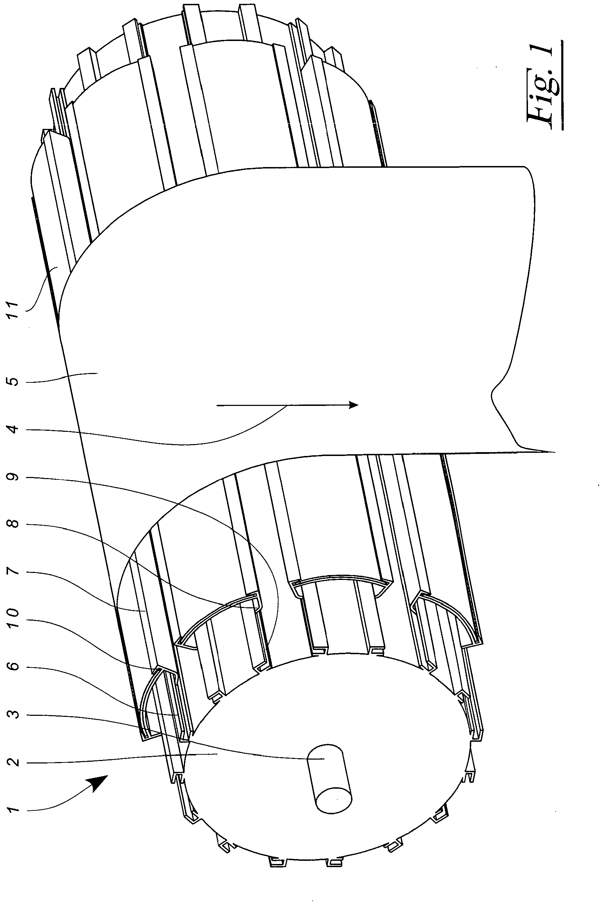

Die Figur 1 zeigt eine Segmentwalze 1, die im Wesentlichen von einem Walzenkörper 2 gebildet ist. Dieser Walzenkörper 2 ist um eine Achse 3 drehbar abgestützt, damit die Segmentwalze 1 eine in Laufrichtung 4 laufende Warenbahn 5 erfassen kann. Dabei wird die Warenbahn 5 auf die Segmentwalze 1 geführt, so dass die Warenbahn 5 aufgrund ihrer eigenen Spannkraft mit einer gewissen Kraft gegen die Segmentwalze 1 drückt.

Der Walzenkörper 2 weist an seinem Außenumfang Lattenhalter 6 auf, welche einstückig an den Walzenkörper 2 angeformt sind. An diesen Lattenhaltern 6 sind Profile 7 längs zur Achse 3 verschiebbar gehalten. Diese Profile 7 werden über nicht dargestellte Steuermittel an den Stirnseiten der Segmentwalze 1 angesteuert, damit diese während eines Umlaufs der Segmentwalze 1 eine rotationssynchrone Schiebebewegung ausführen. Diese Schiebebewegung wird dann auf die Warenbahn 5 übertragen, um eine gewünschte Wirkung auf die Warenbahn 5 auszuüben. Auf diese Weise kann zum Beispiel die Warenbahn 5 in ihrer Lage verändert und/oder breitgestreckt werden. Hierbei können die Profile 7 selbst auch noch symmetrisch bzw. asymmetrisch über deren Länge geteilt sein. Diese Teilung wird zum Beispiel im Zusammenhang mit einer Breitstreckung der Warenbahn 5 benötigt.

Die Profile 7 weisen hierzu Federn 8 auf, die in Nuten 9 der Lattenhalter 6 gehalten sind. Über diese Verbindung sind die Profile 7 in axialer Richtung verschiebbar, quer dazu allerdings fest, insbesondere formschlüssig gehalten.

Um die Segmentwalze 1 im Vorfeld an unterschiedliche Warenbahnen 5 anpassen zu können, ist am Profil 7 eine Aufnahme 10 vorgesehen, in der ein Belag 11 eingesteckt werden kann. Dieser Belag 11 ist dann an die Eigenschaften der jeweiligen Warenbahn besonders angepasst. Beim Wechsel von unterschiedlichen Warenbahnen 5 innerhalb einer Verarbeitungsmaschine kann die Segmentwalze 1 des Weiteren auch durch das einfache Wechseln der Beläge 11 an die neuen Aufgaben angepasst werden. In weiteren Anwendungsfällen kann die Warenbahn 5 auch unmittelbar vom Profil 7 erfasst werden.

Sowohl der Walzenkörper 2 als auch die Profile 7 sind aus Metall hergestellt. Insbesondere haben sich für den Walzenkörper 2 Aluminium und dessen Legierungen bewährt. Diese können relativ einfach im Strangguss- oder Strangpressverfahren mit beliebiger Länge und konstantem Querschnitt hergestellt werden. Auf diese Weise ergibt sich eine sehr kostengünstige und damit wirtschaftliche Herstellung des Walzenkörpers 2. Für die Profile 7 sind auch andere Materialien, insbesondere Eisenmetalle zweckmäßig, um eine hohe Festigkeit trotz dünnwandiger Ausbildung zu realisieren.

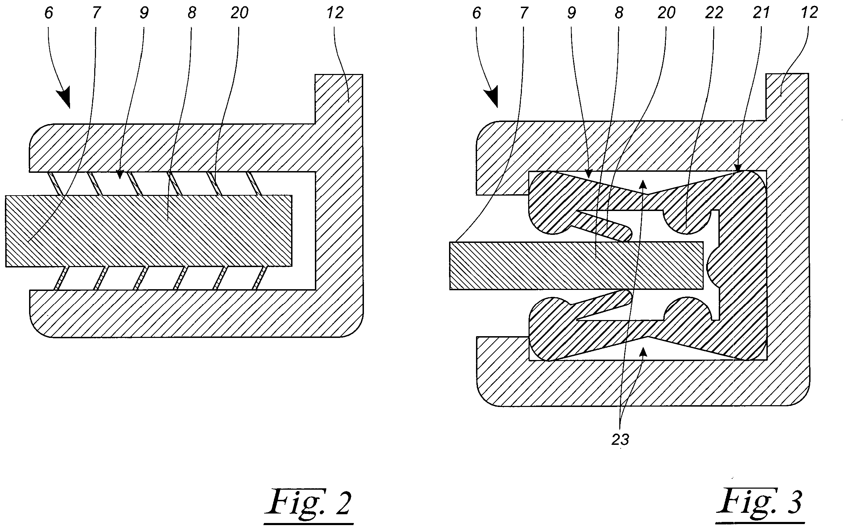

Die weitere Beschreibung erfolgt anhand der Detailzeichnung gemäß Figur 2, die vergrößert den Lattenhalter 6 mit der Feder 8 und der Nut 9 in Schnittdarstellung zeigt.

Am Lattenhalter 6 ist außenseitig eine Schutznase 12 vorgesehen, die die Nut 9 vor Beschädigungen schützt. Diese Schutznase 12 hat einen im Wesentlichen rechteckförmigen Querschnitt und steht radial über die ebenfalls radial ausgerichtete Nutwand über.

Um zu verhindern, dass die Feder 8 in der Nut 9 zum Beispiel anschlägt, weist die Feder 8 des Profils 7 elastische Lippen 20 auf. Diese elastischen Lippen 20 sind einstückig an die Feder 8 angeformt und wesentlich dünnwandiger als die Feder 8 ausgebildet. Alternativ könnten die elastischen Lippen 20 auch einstückig an die Nut 9 angeformt werden. Aufgrund dieser Dünnwandigkeit ergibt sich eine erhöhte Biegbarkeit, so dass das Material des Profils 7 im Bereich der Lippen 20 elastisch verformbar ist. Vorzugsweise werden die Lippen 20 durch Kaltumformung des Profils 7 hergestellt. Insbesondere im Fall der Anwendung eines Nichteisenmetalls für das Profil 7 können die Lippen 20 auch in einem Arbeitsvorgang mit der gesamten Profilierung des Profils 7 beispielsweise nach dem Strangpressverfahren hergestellt werden.

Die Lippen 20 verhindern ein Anschlagen der Feder 8 in der Nut 9 und dadurch zum Beispiel ein Abbremsen bei einer relativen Bewegung beider Teile gegeneinander. Auf diese Weise werden zuverlässig Schwingungen des Profils 7 unterbunden und damit die Bewegungsgenauigkeit des Profils 7 verbessert. Außerdem verhindern die Lippen 20 ein Eindringen von Flüssigkeit in die Nut 9, wenn die Warenbahn 5 im Nassbereich eingesetzt wird.

Die Figur 3 zeigt eine Schnittdarstellung gemäß Figur 2 einer alternativen Ausführungsform der Segmentwalze. Dabei bedeuten gleiche Bezugszeichen gleiche Teile. Im Folgenden wird lediglich auf die Unterschiede zur Ausführungsform gemäß Figur 2 eingegangen.

Bei der Ausführungsform gemäß Figur 3 ist das Gleitelement mit elastischen Lippen 20 bzw. sind die elastischen Lippen 20 mit Gleitfunktion in einem gesonderten Teil 21 vorgesehen. Dieses gesonderte Teil 21 wird vorzugsweise aus einem Polymer hergestellt, so dass es relativ leicht ist, die gewünschten elastisch verformbaren und gleitenden Lippen 20 zu realisieren. Das gesonderte Teil 21 ist dabei formschlüssig in der Nut 9 gehalten. Zu diesem Zweck ist die Nut 9 hinterschnitten ausgebildet. Dies verhindert zuverlässig ein versehentliches Lösen des gesonderten Teils 21 vom Walzenkörper 2. Um die Bewegbarkeit der Feder 8 innerhalb der Nut 9 weiter einzuschränken, sind im gesonderten Teil 21 zusätzliche Abstandshalter 22 vorgesehen. Diese beschränken den Verschiebeweg der Feder 8 quer zur Achse 3, ferner weisen diese Abstandshalter 22 auch eine gleitende Funktion auf. Auf diese Weise werden undefinierte Stellungen der Feder 8 innerhalb der Nut 9 verhindert und eine gleitende Wirkung des Profils 7 wird weiter aufrechterhalten. Des Weiteren bildet dieses gesonderte Teil 21 mit dem Lattenhalter 6 Hohlräume 23, welche bei Überlast zusammengedrückt werden. Auf diese Weise sind die Abstandshalter 22 elastisch verstellbar, so dass auch in dieser Überlastsituation eine elastische Lagerung der Feder 8 gegeben ist. Diese Federwirkung ist aber wesentlich steifer als die der Lippen 20, so dass sich insgesamt eine progressive Federwirkung einstellt. Auf diese Weise ergibt sich eine zusätzliche Dämpfungswirkung, die das Entstehen von Schwingungen im Bereich der Warenbahn 5 verhindert.

### Bezugszeichenliste

- 1: Segmentwalze
- 2: Walzenkörper
- 3: Achse
- 4: Laufrichtung
- 5: Warenbahn
- 6: Lattenhalter
- 7: Profil
- 8: Feder
- 9: Nut
- 10: Aufnahme
- 11: Belag
- 12: Schutznase
- 20: Lippe
- 21: Gesondertes Teil
- 22: Abstandshalter
- 23: Hohlraum

## Patentansprüche

1. Segmentwalze (1), welche mindestens einen Walzenkörper (2) aufweist, der um mindestens eine Achse (3) drehbar gelagert ist, wobei der mindestens eine Walzenkörper (2) außenseitig mindestens eine Nut (9) aufweist, in die mindestens eine Feder (8) mindestens eines längs zur mindestens einen Achse (3) verschiebbaren Profils (7) eingreift, welches mindestens eine Warenbahn (5) mittelbar oder unmittelbar erfasst, wobei das mindestens eine Profil (7) schubfest ausgebildet ist **dadurch gekennzeichnet, dass** am mindestens einen Walzenkörper (2) und/oder am mindestens einen Profil (7) mindestens eine elastische Lippe (20) vorgesehen ist, welche beim Eingriff der mindestens einen Feder (8) in die mindestens eine Nut (9) elastisch deformierbar ist, um das mindestens eine Profil (7) schwingungsarm und verschiebbar zu halten.

2. Segmentwalze nach Anspruch 1, **dadurch gekennzeichnet, dass** die mindestens eine Lippe (20) einstückig mit dem mindestens einen Walzenkörper (2) oder dem mindestens einen Profil (7) verbunden ist.

3. Segmentwalze nach Anspruch 1, **dadurch gekennzeichnet, dass** die mindestens eine Lippe (20) als gesondertes Teil (21) ausgebildet ist und in die mindestens eine Nut (9) oder Feder (8) eingesteckt ist.

4. Segmentwalze nach Anspruch 3, **dadurch gekennzeichnet, dass** das mindestens eine gesonderte Teil (21) in die mindestens eine Nut (9) oder Feder (8) eingeschoben ist und die mindestens eine Nut (9) oder Feder (8) hinterschnitten ausgebildet ist.

5. Segmentwalze nach mindestens einem der Ansprüche 1 bis 4, **dadurch gekennzeichnet, dass** die mindestens eine Feder (8) beidseitig von den Lippen (20) erfasst ist.

6. Segmentwalze nach mindestens einem der Ansprüche 1 bis 5, **dadurch gekennzeichnet, dass** der mindestens einen Lippe (20) mindestens ein Abstandshalter (22) zugeordnet ist.

7. Segmentwalze nach Anspruch 6, **dadurch gekennzeichnet, dass** der mindestens eine Abstandshalter (22) elastisch verstellbar ist.

8. Segmentwalze nach mindestens einem der Ansprüche 1 bis 7, **dadurch gekennzeichnet, dass** die mindestens eine Lippe (20) dünnwandig im Verhältnis zum mindestens einen Profil (7) oder der Nut (9) ausgebildet ist.

9. Segmentwalze nach mindestens einem der Ansprüche 1 bis 8, **dadurch gekennzeichnet, dass** die mindestens eine Lippe (20) eine flüssigkeitsdichte Verbindung herstellt.

10. Segmentwalze nach mindestens einem der Ansprüche 1 bis 9, **dadurch gekennzeichnet, dass** die mindestens eine Lippe (20) als Gleitteil ausgebildet ist.

11. Segmentwalze nach mindestens einem der Ansprüche 1 bis 10, **dadurch gekennzeichnet, dass** im mindestens einen Profil (7) mindestens ein die mindestens eine Warenbahn (5) erfassender Belag (11) gehalten ist.

12. Segmentwalze nach mindestens einem der Ansprüche 1 bis 11, **dadurch gekennzeichnet, dass** das mindestens eine Profil (7) beidendig in den Nuten (9) gehalten ist.

13. Segmentwalze nach mindestens einem der Ansprüche 1 bis 12, **dadurch gekennzeichnet, dass** am mindestens einen Walzenkörper (2) im Bereich der mindestens einen Nut (9) außenseitig mindestens eine Schutznase (12) vorgesehen ist.

## Claims

1. Segment roller (1), which has at least one roller body (2) that is mounted rotatably about at least one axis (3), wherein the at least one roller body (2) has on the outside at least one groove (9), in which at least one tongue (8) of at least one profile (7) displaceable along the length of the at least one axis (3) engages, which profile clasps at least one material web (5) directly or indirectly, the at least one profile (7) is of shear-resistant configuration, **characterized in that** on the at least one roller body (2) and/or on the at least one profile (7) is provided at least one elastic lip (20), which, upon the engagement of the at least one tongue (8) in the at least one groove (9), is elastically deformable in order to hold the at least one profile (7) with little vibration in a displaceable manner.

2. Segment roller according to Claim 1, **characterized in that** the at least one lip (20) is integrally connected to the at least one roller body (2) or the at least one profile (7).

3. Segment roller according to Claim 1, **characterized in that** the at least one lip (20) is configured as a separate part (21) and is plugged into the at least one groove (9) or tongue (8).

4. Segment roller according to Claim 3, **characterized in that** the at least one separate part (21) is inserted into the at least one groove (9) or tongue (8), and which at least one groove (9) or tongue (8) is configured in undercut form.

5. Segment roller according to at least one of Claims 1 to 4, **characterized in that** the at least one tongue (8) is clasped on both sides by the lips (20).

6. Segment roller according to at least one of Claims 1 to 5, **characterized in that to** the at least one lip (20) is assigned at least one spacer (22).

7. Segment roller according to Claim 6, **characterized in that** the at least one spacer (22) is elastically adjustable.

8. Segment roller according to at least one of Claims 1 to 7, **characterized in that** the at least one lip (20) has a thin-walled configuration in relation to the at least one profile (7) or the groove (9).

9. Segment roller according to at least one of Claims 1 to 8, **characterized in that** the at least one lip (20) establishes a liquid-tight connection.

10. Segment roller according to at least one of Claims 1 to 9, **characterized in that** the at least one lip (20) is configured as a sliding part.

11. Segment roller according to at least one of Claims 1 to 10, **characterized in that** in the at least one profile (7) is held at least one covering (11), which clasps the at least one material web (5).

12. Segment roller according to at least one of Claims 1 to 11, **characterized in that** the at least one profile (7) is held at both ends in the grooves (9).

13. Segment roller according to at least one of Claims 1 to 12, **characterized in that** on the outside of at least one roller body (2), in the region of the at least one groove (9), is provided at least one protective boss (12).

## Revendications

1. Rouleau à lattes (1) qui présente au moins un noyau de cylindre (2) qui est monté rotatif sur au moins un axe (3), ledit au moins un noyau de cylindre (2) présentant côté extérieur au moins une rainure (9) dans laquelle vient en prise au moins une languette (8) d'au moins un profilé (7) mobile par rapport audit au moins un axe (3) et qui saisit indirectement ou directement au moins une nappe de tissu (5), ledit au moins un profilé (7) étant réalisé de manière résistante au cisaillement,
**caractérisé en ce que** sur ledit au moins un noyau de cylindre (2) et/ou sur ledit au moins un profilé (7), au moins une lèvre élastique (20) est prévue qui peut se déformer de manière élastique lorsque ladite au moins une languette (8) vient en prise dans ladite au moins une rainure (9) afin de maintenir ledit au moins un profilé (7) avec peu de vibrations et de manière mobile.

2. Rouleau à lattes selon la revendication 1, **caractérisé en ce que** ladite au moins une lèvre (20) est reliée d'un seul tenant audit au moins un noyau de cylindre (2) ou audit au moins un profilé (7).

3. Rouleau à lattes selon la revendication 1, **caractérisé en ce que** ladite au moins une lèvre (20) est réalisée sous la forme d'une pièce séparée (21) et est emboîtée dans ladite au moins une rainure (9) ou languette (8).

4. Rouleau à lattes selon la revendication 3, **caractérisé en ce que** ladite au moins une pièce séparée (21) est insérée dans ladite au moins une rainure (9) ou languette (8), et ladite au moins une rainure (9) ou languette (8) est réalisée en contre-dépouille.

5. Rouleau à lattes selon au moins l'une des revendications 1 à 4, **caractérisé en ce que** ladite au moins une languette (8) est saisie par les lèvres (20) des deux côtés.

6. Rouleau à lattes selon au moins l'une des revendications 1 à 5, **caractérisé en ce qu'**au moins un écarteur (22) est associé à ladite au moins une lèvre (20).

7. Rouleau à lattes selon la revendication 6, **caractérisé en ce que** ledit au moins un écarteur (22) est réglable élastiquement.

8. Rouleau à lattes selon au moins l'une des revendications 1 à 7, **caractérisé en ce que** ladite au moins une lèvre (20) est réalisée à paroi fine par rapport audit au moins un profilé (7) ou à la rainure (9).

9. Rouleau à lattes selon au moins l'une des revendications 1 à 8, **caractérisé en ce que** ladite au moins une lèvre (20) crée une liaison étanche aux fluides.

10. Rouleau à lattes selon au moins l'une des revendications 1 à 9, **caractérisé en ce que** ladite au moins une lèvre (20) est réalisée sous la forme d'une pièce coulissante.

11. Rouleau à lattes selon au moins l'une des revendications 1 à 10, **caractérisé en ce que** dans ledit au moins un profilé (7), au moins un revêtement (11) saisissant ladite au moins une nappe de tissu (5) est maintenu.

12. Rouleau à lattes selon au moins l'une des revendications 1 à 11, **caractérisé en ce que** ledit au moins un profilé (7) est maintenu aux deux extrémités dans les rainures (9).

13. Rouleau à lattes selon au moins l'une des revendications 1 à 12, **caractérisé en ce que** sur ledit au moins un noyau de cylindre (2), au niveau de ladite au moins une rainure (9), au moins un bec de protection (12) est prévu côté extérieur.
